# EUROPEAN PATENT APPLICATION

(11) **EP 4 737 095 A1**
(43) Date of publication of application: **06.05.2026**
(21) Application number: 24209471.2
(22) Date of filing: 29.10.2024
(51) Int. Cl.: B29C 48/05, B29C 48/78

(54) **METHOD FOR PRODUCING A BIORESORBABLE AND/OR BIOCOMPATIBLE OPTICAL FIBER**

(71) Applicant: Università di Pisa, 56126 Pisa (IT)
(72) Inventor: SURDO, Salvatore, 56126 Pisa (PI) (IT); MINOPOLI, Antonio, 56126 Pisa (PI) (IT); BELLOTTI, Elena, 56126 Pisa (PI) (IT); BARILLARO, Giuseppe, 56126 Pisa (PI) (IT)
(74) Representative: Pretato, Filippo

(57) **Abstract**

Method for producing a bioresorbable and/or biocompatible optical fiber, comprising at least the following steps: a) provision of at least one hydrogel of at least one polymer; said polymer of said solution being selected from the group comprising bioresorbable and/or biocompatible polymers; said hydrogel being provided with a threshold temperature, which divides: a first temperature range, above or below said threshold temperature, wherein said hydrogel is in a liquid state; a second temperature range, below or above said threshold temperature, wherein said hydrogel is in a solid state; said method comprising at least a further step: b) first temperature regulation of said hydrogel, though heating and/or cooling means, so as to heat and/or cool said hydrogel above and/or below a said threshold temperature, in order to lead said hydrogel in the first temperature range; c) extrusion of said hydrogel in liquid state through extrusion means, obtaining at least a filament of said hydrogel; during said step c) said hydrogel changing from said first temperature range to said second temperature range in solid state; said filament of said hydrogel in solid state defining an optical fiber.

## Description

### Field of application of the invention

The present invention concerns a method for producing a bioresorbable and/or biocompatible optical fiber and hence finds advantageous application in the technical field of optical devices, namely devices for the transport of light, such as optical fibers, and more specifically to a method for producing optical fibers which are biocompatible and/or bioresorbable.

The method according to the present invention permits to prepare optical fibers intended to be used in human bodies, for treating diseases or collect information for diagnostic purposes.

Another aspect of the present invention concerns also a method for functionalizing a polymer, which can be implemented in the above-mentioned method for producing a bioresorbable and/or biocompatible optical fiber.

Therefore, the present invention finds application in the technical field of producing and commercialising medical equipment and devices.

More specifically, the present invention finds advantageous use in the technical field of the production and marketing of sensors, apparatus or other devices for the therapeutic and/or diagnostic/sensing applications.

### State of the art

The use of optical fibers for therapeutic and/or diagnostic/sensing applications purposes has been known for a long time.

More specifically, biocompatible optical fibers, which are intended for use in medical and biomedical applications without causing tissue damage or provoking adverse reactions in the human or animal body, have been raised great interest.

Optical fibers are widely used in various medical applications, particularly in human therapeutic purposes, due to their unique properties of transmitting light with minimal loss over long distances.

For example, optical fibers are used in endoscopes for minimally invasive surgery, allowing for real-time imaging and light delivery. Recent advancements have improved the flexibility, durability, and miniaturization of these fibers, enabling better access to difficult-to-reach areas within the body.

Moreover, optical fibers are used to deliver light to activate photosensitive drugs in photodynamic therapy, a treatment for cancer and other pathological conditions. The latest fibers are designed to precisely control light delivery, minimizing damage to surrounding healthy tissues.

In treatments such as hyperthermia for cancer, optical fibers are used to measure and deliver heat to tissues. State-of-the-art fibers offer real-time temperature monitoring and control, ensuring therapeutic levels are reached without overheating surrounding tissues.

Nowadays, research is ongoing into developing biocompatible and even biodegradable optical fibers that can be safely left in the body after delivering therapy, eliminating the need for removal surgery.

For example, optical fibers known in the state of the art are used for irradiating a specific molecule with light in a specific range of wavelengths and then measuring the concentration of the latter (e.g. oxygen, glucose, etc.), by knowing its characteristic absorption spectrum in the aforementioned range of wavelengths.

Optical fibers are suited to assess the activity of several types of cells, such as neurons, by providing light stimuli.

For example, optical fibers are already known in the field of photodynamic phototherapy (also known as PDT) since they are suited to extend the PDT to the treatment of tumours located in deep tissues.

This type of biocompatible optical fibers is designed to combine the light transmission properties intrinsic to the traditional optical fibers with coating material that is safe when contacting biological tissue.

However, biocompatible optical fibers must be surgically removed after their utilization as they cannot be reabsorbed by the patient's body.

Recently, there has seen significant progress in the development and realization of optical fibers made of materials that are not only biocompatible but also bioabsorbable, i.e. they can be reabsorbed by the body after performing their function, eliminating the need for a second operation to remove the fibers itself.

The known methods for producing above-mentioned optical fibers generally provide the use of biocompatible and bioresorbable materials, such as polymers, glass or proteins.

However, the methods already known in the state of the art for producing biocompatible and bioresorbable optical fibers are particularly complex to implement.

Another drawback is that the above-mentioned methods require the execution of multiple steps in order to produce a biocompatible and/or bioresorbable optical fiber.

Another drawback of the above-mentioned method is that it requires the use of chemical solvents and/or reagents that are toxic and/or cytotoxic for the human body and/or for any biological tissue.

Therefore, another drawback of the prior art methods relies in that the optical fiber thus produced can have traces of toxic and/or cytotoxic solvent, which render them detrimental for biological tissue and/or human body.

Another drawback of the prior art methods for the production of biocompatible and bioresorbable optical fibers is that such methods require complex equipment, such as mould to shape the fibers.

Another drawback of the above-mentioned method for producing biocompatible and/or bioresorbable optical fibers is that the length and diameter of the optical fiber are bound by the size of the moulds.

In other words, with the traditional methods in order to obtain optical fibers with long length, for example 1 meters, it is mandatory to have cumbersome moulds, which need to be custom-made for each new length requirement.

Another drawback of the traditional methods is that such methods are time consuming and expensive.

Another drawback of the traditional methods is that such methods do not allow to extrude optical fibres directly within a hosting material, such as, for example a biological tissue.

### Presentation of the invention

The present invention aims to overcome the above technical drawbacks by providing a new method for producing a bioresorbable and/or biocompatible optical fiber.

Specifically, one purpose of the present invention is to provide a method for producing biocompatible and/or bioresorbable optical fibers that is easy to implement.

A further purpose of the present invention is to provide a method for producing biocompatible and/or bioresorbable optical fibers that requires a reduced number of steps.

A further purpose of the present invention is to provide a method for producing biocompatible and/or bioresorbable optical fibers that provides the use of biocompatible and bioresorbable starting materials with respect to biological tissue.

Another purpose of the present invention is to provide a method for producing biocompatible and/or bioresorbable optical fibers that provides the use chemical agents, such as solvents and/or reagents that are safe for biological tissue.

A further purpose of the present invention is to provide a method for producing biocompatible and/or bioresorbable optical fiber which is completely safe for biological tissue.

A further purpose of the present invention is to provide a method for producing biocompatible and/or bioresorbable optical fiber whose dimensions do not depend on the dimensions of a mould.

In other words, a purpose of the present invention is to provide a method that allows to produce optical fibers of variable thickness and/or length, for example selectable by the user.

A further purpose of the present invention is to provide a method for producing biocompatible and/or bioresorbable optical fiber that is particularly time and cost effective.

These purposes, along with others that will be better elucidated below, are achieved by a method for producing biocompatible and/or bioresorbable optical fiber of the type according claim 1.

A further purpose of the present invention is to also provide a method for functionalizing a polymer, which is also compatible with said method for producing biocompatible and/or bioresorbable optical fibers. More in detail, the method for functionalizing a polymer - if used in combination with the method for producing biocompatible and/or bioresorbable optical fibers - allows to produce functionalized optical fibers suited to detect the concentration of target molecules (i.e. chemiotherapeutical molecules) that show a characteristic absorption and/or emission spectrum in a specific range of wavelengths.

### Brief description of the drawings

The advantages and features of the present invention will clearly emerge from the following detailed description of some preferred but not limiting configurations of a method for producing bioresorbable and/or biocompatible optical fibers with special reference to the following drawings:
- **Figure 1A** shows a schematic illustration of a step of the method for producing a bioresorbable and/or biocompatible optical fiber according to the present invention;
- **Figure 1B** shows a schematic illustration of a further step of the method for producing a bioresorbable and/or biocompatible optical fiber according to the present invention;
- **Figure 2** shows a schematic illustration of a further embodiment of the method for producing a bioresorbable and/or biocompatible optical fiber according to the present invention;
- **Figure 3** shows a schematic illustration of a possible application of the method for producing a bioresorbable and/or biocompatible optical fiber according to the present invention;
- **Figure 4** shows a schematic view of the optical fiber according to the invention inserted in a biological tissue, in order to detect a concentration of a target molecule.

### Detailed description of the invention

The present invention concerns a method for producing a bioresorbable and/or biocompatible optical fiber.

The method, which is the subject matter of the present invention can be used for producing bioresorbable and/or biocompatible optical fiber which are designed for therapeutic and/or diagnostic and/or sensing applications.

The optical fiber obtainable through the method according to the invention is identified in the attached figures with the numeric reference 1.

The optical fiber 1, which is also part of the present invention, can be used in several applications, such as minimally invasive surgery, wherein the optical fiber is used in endoscopes, which allow doctors to view the inside of a body without making large incisions. The optical fiber 1 is configured to transmit light, in order to illuminate the area of interest and carry the image back to the doctors, enabling them to see internal organs such as the stomach, intestines, and lungs.

Moreover, the optical fiber according to the invention can be used in precision surgery, in fact the optical fiber 1 can guide laser beams used in surgeries, for example for removing tumours or repairing damaged tissues. The high precision of laser surgeries often results in less bleeding, reduced infection risk, and quicker recovery times.

Moreover, the optical fiber 1 can be used in biomedical sensing, wherein optical fibers are used in various sensors to monitor physiological parameters such as temperature, pressure, and chemical composition of body fluids. These sensors can be implanted in the body or used externally.

Obviously, the optical fiber according to the invention can be used in veterinary medicine. In the following, the term "body" will be used independently from the actual application, being it human or other.

The method for producing a bioresorbable and/or biocompatible optical fiber 1, which is the subject matter of the present invention, comprises at least a step a) of providing at least one hydrogel 2 of at least one polymer.

Within the meaning of this description and within the scope of the present patent application, with the expression "hydrogel" it is intended a biphasic material, comprising at least a solid part retaining a liquid part. More in detail, the hydrogel according to the invention comprises, as solid part, a three-dimensional network of at least a (preferably hydrophilic) polymer, which absorbs and/or retains the liquid part, namely at least a water-based solvent, preferably without dissolving or losing its structure.

According to the present invention, the at least one polymer of the hydrogel 2 provided in the step a) is selected from the group comprising bioresorbable and/or biocompatible polymers.

Within the meaning of this description and within the scope of the present patent application, with the expression "bioresorbable and/or biocompatible polymer" it is intended a polymer that does not harm and/or can be easily absorbed by human and/or animal body over time.

For example, bioresorbable polymers are configured to gradually degrade, either spontaneously or on-demand upon triggering, and be absorbed or eliminated by the body's natural processes, hence eliminating the need for surgical removal.

More in detail, within the meaning of this description and within the scope of the present patent application, with the expression "biocompatible polymer" it is intended a type of polymer that can contact biological tissue (and preferably a living tissue) without triggering a significant immune response or causing harm to the body.

In particular, biocompatible polymers can interact with biological systems without causing toxicity, inflammation or rejection processes.

Therefore, the optical fiber 1 object of the present invention and obtainable through the method, which is also part of the present invention, does not harm and/or can be easily absorbed by human and/or animal body over time.

Preferably, the at least one bioresorbable and/or biodegradable polymer of the hydrogel 2 provided in step a) is selected from the group comprising Agarose, Methylcellulose, Pluronic, Polyethylene glycol diacrylate (PEGDA), and Polyacrylamide (PAM) and/or one of their functionalized forms.

The term "functionalized form" should be interpreted as a compound comprising one of said polymers and at least one functional group.

More preferably, said functionalized form of said polymers can be obtain by a method for functionalizing a polymer which will be describe later in the present description.

Preferably, the bioresorbable and/or biodegradable polymer comprises a linear polymer made up of the repeating unit of agarobiose, which is a disaccharide made up of D-galactose and 3,6-anhydro-L-galactopyranose. In particular, according to the preferred embodiment of the present invention, the bioresorbable and/or biodegradable polymer is Agarose.

Preferably, the at least one polymer is used in a concentration comprised between 1 to 3 %w/v.

According to the preferred embodiment of the present invention, the at least one polymer, preferably Agarose, is used in a concentration approximately equal to 2 % w/v.

Preferably, the hydrogel of at least one polymer which is provided in step a) of the method of the present invention comprises an amount of water-based solvent comprised between 97 and 99% w/v.

Agarose hydrogel 2 exhibits a refractive index that preferably increases linearly with the agarose concentration.

For example, an optical fiber 1 realized by using 2% w/v agarose hydrogel has a refractive index of about 1.336 in the visible range that results suitable for light guidance in water (refractive index 1.333).

However, the effective refractive indexes of biological tissues typically range from 1.34 to 1.56. To retain the guidance capability of agarose optical fibres in biological tissues, biocompatible/bioresorbable nanoparticles (e.g., silica nanoparticles) and inorganic salts can be used to dope the hydrogel 2 and, hence, increase the fiber refractive index.

Eventually, a bioresorbable cladding can be implemented (e.g., a layer of calcium alginate) to further enhance the light confinement and propagation through the fibre.

Therefore, step a) can provide to stir along with agarose biocompatible/bioresorbable nanoparticles and or bioresorbable cladding, so that the refractive index of the optical fiber reaches a predetermined desired value.

Even if the agarose hydrogel 2 would be transparent in the visible wavelength, the doping and/or decoration needed for increasing the refractive index might result in optical losses due to light scattering.

Therefore, attention should be paid in avoiding aggregates formation when doping the hydrogel 2 (for example with salts) and selecting nanoparticles (for example silica nanoparticles) with low scattering cross section in the visible wavelength (size < 100 nm).

These strategies can enhance the light guidance through the optical fiber (thanks to the higher refractive index contrast between the fiber and the surrounding medium) without introducing additional optical losses (due to the scattering).

According to the preferred embodiment of the present invention, the hydrogel 2 of at least one polymer, which is provided in step a) of the present method, comprises an amount of water-based solvent approximately equal to 98 % w/v.

Preferably, such water-based solvent can be deionized and/or filtered water.

According to the invention, said hydrogel 2 is provided with a threshold temperature, which divides the possible temperatures of said hydrogel 2 in two operating temperature ranges: a first temperature range, wherein said hydrogel 2 is in a liquid state; and a second temperature range, opposite to said first temperature range, wherein said hydrogel 2 is in a solid state.

According to the preferred embodiment of the invention, wherein the polymer is Agarose, such first temperature range is above said threshold temperature and said second temperature range is below said threshold temperature.

Within the meaning of this description and within the scope of the present patent application, the term "threshold temperature" refers to the temperature at which the polymeric solution undergoes a solid-liquid transition. More specifically, the polymeric solution preferably undergoes a sol-gel transition, wherein the polymeric material changes from a sol state (which is a colloidal solution in liquid state) to a *gel* state (which is an integrated or cross-linked network in solid or semi-solid state).

According to the preferred embodiment of the present invention, the threshold temperature of a 2%w/v hydrogel 2 comprising Agarose (as bioresorbable and/or biodegradable polymer) is comprised between 40°C and 50°C, preferably about 45°C.

Advantageously, the hydrogel 2 with concentration of agarose of 2%w/v is in the liquid state when it has a temperature higher than 45°C, while the hydrogel 2 is in the solid state when it has a temperature lower than 45°C.

Preferably, step a) comprises a first sub-step of heating said hydrogel, preferably between 50°C and 80°C.

According to the preferred embodiment of the present invention, step a) provides to heat the hydrogel 2 at a temperature of about 60°C.

Preferably, step a) comprises a second sub-step of stirring the solution in order to obtain a (substantially) homogeneous liquified hydrogel.

The term "homogeneous" should be interpreted, according to the scope of the present patent application, as a mixture of polymer in a solvent (mainly water) wherein the presence of the aforementioned polymer is substantially constant throughout the volume of the hydrogel 2.

Preferably, such first and such second sub-steps of step a) can be executed simultaneously trough means per se known, such as a magnetic stirrer equipped with a heating plate.

Obviously, any means capable of performing the aforementioned sub-steps of step a), which are per se known to the person skilled in the art, must be considered as included in the scope of protection of the present patent application.

The method according to the present invention comprises a step b) of first temperature regulation of said hydrogel 2.

The step b) is executed through heating and/or cooling means 3, so as to heat and/or cool said hydrogel 2 above and/or below said threshold temperature, in order to lead said hydrogel 2 in the first temperature range.

According to the preferred embodiment of the present invention, wherein the polymer is preferably agarose, the first temperature regulation of step b) of the hydrogel is executed through heating means in order to heat the hydrogel 2 until a temperature higher with respect to the threshold temperature.

The method according to the invention further comprises a step c) of extrusion of said hydrogel 2 in liquid state through extrusion means 4, shaping said hydrogel 2 into at least a filament 5.

Conveniently, during said step c) said hydrogel 2 changes from said first temperature range in liquid state to said second temperature in solid state.

Hence, said filament 5 of said hydrogel 2 in solid state defines said optical fiber 1.

Therefore, the method according to the invention is capable of producing optical fibers made of biocompatible materials in a quick, easy, economic and reliable manner.

More in detail, the method according to the invention allows to extrude a liquid polymer hydrogel 2 through extrusion means 4, while the hydrogel solidifies becoming a solid filament that will define the optical fiber 1.

Advantageously, said step c) preferably involves the passage of the liquified hydrogel 2 through a nozzle 6 having a cross section (approximately) equal to the cross section desired for the optical fiber 1.

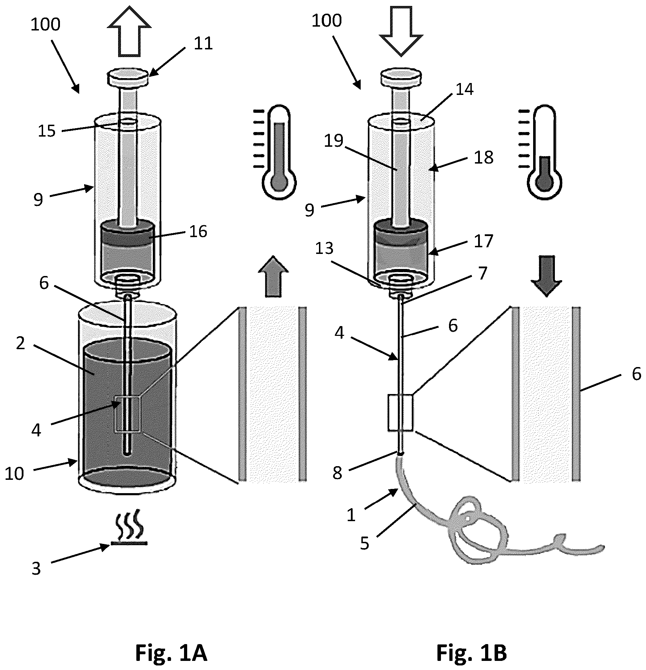

According to a first embodiment shown in attached figures 1A and 1B, the extrusion means 4 comprise said nozzle 6.

Preferably, the nozzle 6 has prismatic and/or cylindric shape, and internally defines a channel configured to be trespassed by said hydrogel in liquid state, and during its change in solid state.

Advantageously, said nozzle 6 preferably has a cross section having an average diameter comprised between 0.1 and 2 mm, so that said step c) provides an optical fiber 1 having an average diameter comprised between 0.1 and 2 mm.

Advantageously, said nozzle 6 extends between a first end 7 in which, during said step c) the hydrogel 2 enters in the liquid state, and a second end 8 from which, during said step c), the hydrogel 2 exits in the solid state.

Advantageously, upstream of said first end 7, the hydrogel 2 is kept in said first temperature range, in said step c) said hydrogel 2 passes from the first temperature range to the second temperature range while it is extruded through said nozzle 6.

Advantageously, according to the preferred embodiment of the invention, wherein said polymer is agarose, said step b) is executed by housing said hydrogel 2 in a reservoir 9 heated by heating means 3, said reservoir 9 being fluidically connected to said first end 7 of said nozzle 6.

Conveniently, such heating means may be of a known type, such as a wire resistive heater or a heater plate, suited to keep the reservoir housing the hydrogel in the first temperature range, that this at a temperature range at which the hydrogel housed within it is in the liquid state.

Conveniently, the extrusion means 4 comprises at least said nozzle 6.

Preferably, the nozzle 6 may comprise at least one capillary, realized in metallic or polymeric material.

According to an alternative embodiment, the nozzle 6 may comprise a needle, such as a guidewire introducer needle.

Conveniently, the second end 8 of the nozzle 6 is preferably free in order to consent the exit of the hydrogel 2 in the solid state.

In this way the length of the filament of hydrogel is only limited by the amount of hydrogel present in the reservoir 9 and provided to the extrusion means 4.

Therefore, the method according to the invention is independent from any mould or similar device, being capable of producing optical fibers 1 of any length.

Preferably, the state transition from liquid to solid is promoted by the extrusion means 4 (and in particular by nozzle 6) which have a temperature comprised in the second temperature range.

According to the preferred embodiment of the invention, the temperature of the extrusion means 4 (and in particular of the nozzle 6) is below or equal to the threshold temperature.

According to the preferred embodiment of the present invention, the nozzle 6 has a temperature lower than the threshold temperature, more preferably equal to environment temperature.

Differently, the extrusion means 4 can comprise cooling means (which are not depicted in the attached figures and per se well-known to the skilled person in the art) configured to reduce the temperature at least of the nozzle 6 at least until it reaches the second temperature range.

Preferably, the method according to the invention can be actuated trough an extruding equipment 100, as depicted in the attached figures.

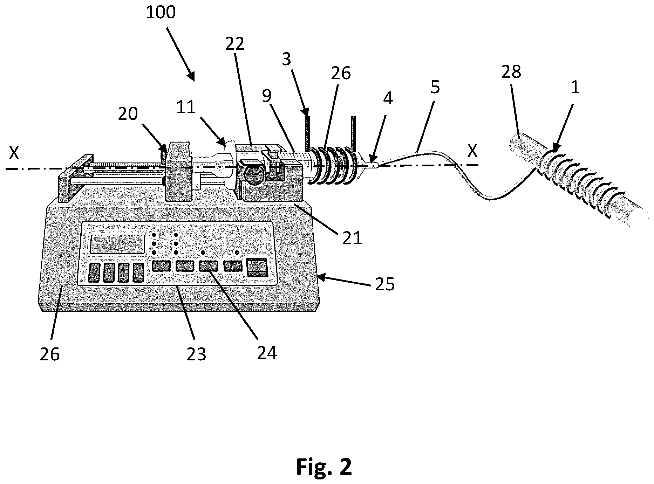

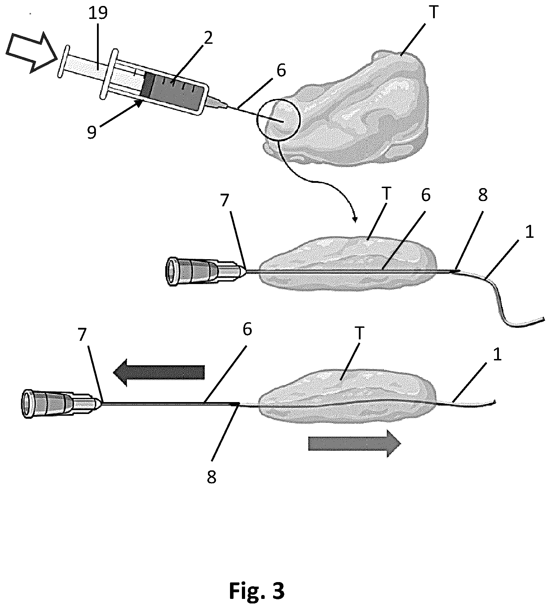

More in detail, figures 1A, 1B and 3 show a first embodiment of the extruding equipment 100, while figure 2 shows a second embodiment of the extruding equipment 100.

According to the first embodiment, the extruding equipment 100 comprises a first reservoir 9 (which coincides with the reservoir 9 already disclosed above) and a second reservoir 10 (visible in figure 1A).

The second reservoir 10 is preferably hydraulically separated from the first reservoir 9 and is configured to house the hydrogel 2 in liquid state.

The second reservoir 10 is mechanically associated with said heating means 3 which are configured to heat the hydrogel 2 housed in the second reservoir 10 until it reaches (and maintains) a temperature comprised in the first temperature range.

Preferably, the first reservoir 9 is mechanically attached to the nozzle 6 of the extrusion means 4. More in detail, the first reservoir 9 is fluidically connected to the first end 7 of the nozzle 6.

According to the first embodiment of the extruding equipment 100, the method according to the invention comprises a step of movement of said hydrogel 2 (in liquid state) from said second reservoir 10 into said first reservoir 9 (which can be seen in figure 1A).

Preferably, the step of moving the hydrogel 2 is performed through said extrusion means 4, and in particular through said nozzle 6.

During the step of moving the hydrogel 2, the hydrogel 2 moves along the nozzle 6 starting from the second end 8 towards the first end 7, until it enters the first reservoir 9.

Preferably, the extruding equipment 100 comprises actuating means 11 mechanically associated with the first reservoir 9, configured to actuate a controlled movement of the hydrogel in liquid state from (or into) the first reservoir 9.

More in detail, the first reservoir 9 has prismatic shape and preferably cylindric shape.

The first reservoir 9 extends between a third end 13 and a fourth end 14, opposite to the third end 13.

Preferably the third end 13 of the first reservoir 9 is mechanically and hydraulically connected to the first end 7 of the nozzle 6.

Preferably, the fourth end 14 of the first reservoir 9 is mechanically associated with the actuating means 11.

More in detail, the fourth end 14 of the first reservoir 9 is provided with an aperture 15 al least partially crossed by said actuating means 11.

The actuating means 11 preferably comprise pressing element 16, housed within the first reservoir 9 and configured to divide an internal volume of the first reservoir 9 between a first zone 17 configured to store the hydrogel 2 in liquid form, and a second zone 18.

The actuating means 11 comprise an elongated element 19 mechanically attached to the pressing element 16 and crossing the aperture 15 of the fourth end 14.

Preferably, the pressing element 16 is counter-shaped with respect to an inner wall of the first reservoir 9 so that the pressing element denies any leakage of the hydrogel 2 from the first zone 17 to the second zone 18 of the internal volume of the first reservoir 9.

The step of moving the hydrogel 2 in liquid state from the second reservoir 10 to the first reservoir 9 preferably provides to insert the second (free) end 8 of the nozzle 6 of the extrusion means 4 within the second reservoir 10, dipping the second end 8 of the nozzle in the hydrogel stored therein.

Moreover, the step of moving the hydrogel 2 in liquid state from the second reservoir 10 to the first reservoir 9 preferably provides to activate the actuating means 11, and in particular to pull the elongated element 19 so that the pressing element 16 moves in a direction from the third end 13 towards the fourth end 14, forming a pressure drop within the first zone 17 of the internal volume of the first reservoir.

Therefore, the step of moving the hydrogel 2 in liquid state from the second reservoir 10 to the first reservoir 9 preferably provides to move the hydrogel 2 by depression between the atmosphere pressure and the first zone 17 of the internal volume of the first reservoir 9.

Hence, the first zone 17 of the first reservoir 9 is replenished with hydrogel 2 in liquid state.

According to this embodiment, the step c) of extrusion provides to push the elongated element 19 of the extruding means 11 from the fourth end 14 towards the third end 13 of the first reservoir 9, so that the hydrogel in liquid state present in the first zone 17 of the internal volume of the first reservoir 9 enters the nozzle through the first end 7, trespasses the internal channel of the nozzle 6, wherein the hydrogel temperature changes from the first temperature range to the second temperature range, and hence the hydrogel in solid state exits the nozzle through the second end 7.

According to the first embodiment, the actuation of the actuating means 11 is preferably performed manually by an operator or a technician.

According to the second embodiment of the extruding equipment 100 depicted in the attached figure 2, all the structural features disclosed with reference to the first embodiment must be understood as disclosed also with reference to the second embodiment.

The main difference between the first embodiment and the second embodiment relies on the actuation of the actuating means 11.

In fact, the actuating means 11 according to the second embodiment are preferably substantially automatic.

More in detail, the actuating means 11 according to the second embodiment comprise a pusher 20, and preferably a linear pusher 20, mechanically attached to the elongated element 19 of the actuating means 11 and configured to actuate the elongated element 19 (and hence the pressing element 16) along a movement direction between the third end and the fourth end 13, 14 of the first reservoir 9.

For example, the actuating means 11 according to the second embodiment of the extruding equipment 100 comprise a support base 21, configured to support the pusher 20. The pusher 20 preferably defines an extruding direction X.

The support base 21 comprises a housing 22 configured to mechanically fasten the reservoir 9 to the support base 21.

Preferably, the housing 22 is configured to fasten the reservoir 9 to the support base 21 so that the elongated element 19 (and preferably the nozzle 6) extends substantially parallel to the extruding direction X.

Preferably, the pusher 20 of the actuating means 11 according to the second embodiment is mechanically connected to the elongated element 19, so that the movement of the pusher 20 entails the movement of the elongated element 19 and hence of the pressing element 16.

The actuating means 11 according to the second embodiment depicted in figure 2 preferably comprise an electric motor (not shown in the attached figures and per se well-known to the skilled person) configured to move the pusher 20 parallel to the extruding direction X.

Preferably, the electric motor is electronically connected to an electronic control unit (not shown in the attached figures and per se well-known to the skilled person) configured to control and command the movement of the electric motor and hence of the pusher 20.

Preferably, the extruding equipment 100 according to the second embodiment comprises a command device 23 electronically connected to the electronic control unit and comprises an input device (such as a keyboard or a keypad 24 or a touchscreen) configured to receive user inputs to control the movement of the pusher 20.

Preferably, the extruding equipment 100 according to the second embodiment comprises a containment structure 25, preferably box-shaped, configured to house the electronic control unit and the electric motor.

Preferably, the containment structure 25 comprises an upper wall defining the support base 21 and at least a lateral wall 26 on which the command device 23 is mechanically attached.

Preferably, the heating means 3 are directly associated with the reservoir 9. For example, the heating means 3 can comprise an electrical resistor 26, preferably arranged around the reservoir 9 and configured to heat the hydrogel stored therein up to the first temperature range.

Preferably, the electronic control unit is electronically connected to energy supply means (not shown in the attached figures) which are electrically connected to the electrical resistor 26, and the electronic control unit is configured to command the activation of the energy supply means in order to activate the heating means 3.

For example, according to the second embodiment, to approach a temperature above the agarose threshold temperature, the energy supply means can deliver a 5 V power supply, while the resistor 26 can comprise a constantan wire provided with high resistivity (e.g., 4.9 × 10⁻⁷ Ωm).

Preferably, the resistor 26 can comprise two coaxial constantan coils with ten windings each, configured to provide a temperature of approximately 65 °C inside the reservoir 9, which is enough to keep a 2% w/v agarose hydrogel in its liquid state.

Preferably, according to the preferred embodiment of the present invention, the extrusion rate of the hydrogel 2 along the nozzle 6 is approximately of 50 cm/min.

More in detail, a flow rate of 0.1 ml/min is preferable to extrude a 0,5mm diameter 2% w/v agarose optical fiber, while having a 9cm long nozzle 6 with an extrusion rate of approximately 50 cm/min.

During step c) of extruding said optical fiber, the fiber exiting the second end 8 of the nozzle 6 can be wrapped around a reel 28.

The Applicant successfully extruded agarose optical fibres with lengths up to 1 m. The total fibre length depends on the agarose volume contained in the reservoir 9. Therefore, the optical fiber according to the invention can be virtually extended endlessly.

According to the particular embodiment shown in figures 2, the optical fiber 1 is wrapped around a reel 28 of diameter of about 1,2cm.

Figure 3 is an example, showing a possible application of the optical fibre produced by the method according to the invention.

More in detail, the method according to the invention can be used to produce the optical fiber 1 directly inside the tissue T to be treated, defining an in-situ extrusion.

Fiber extrusion in situ would represent a remarkable achievement in view of reducing the surgical invasiveness during a device implantation.

Thus, the present invention can be used to release agarose optical fibres in soft tissues. The proposed strategy for in situ fiber extrusion is schematically depicted in Figure 3.

More in detail, after the tissue penetration, the nozzle 6 is rigidly withdrawn contextually to the fiber extrusion.

As a result, the optical fiber tautly extends from the target site in tissue T to the skin exterior.

The present invention also relates to a bioresorbable and/or biocompatible optical fiber comprising at least one layer of hydrogel of at least one polymer.

All features disclosed with reference to the method must also be understood to be described with reference to the optical fiber, whether taken alone or in any combination thereof.

According to the present invention the polymer is selected from the group comprising bioresorbable and/or biodegradable polymers.

Preferably, the at least one bioresorbable and/or biodegradable polymer of the hydrogel is selected from the group comprising Agarose, Methylcellulose, Pluronic, Polyethylene glycol diacrylate (PEGDA), and/or Polyacrylamide (PAM).

According to a preferred embodiment of the present invention, the polymer is Agarose.

Preferably, the optical fibers 1 object of the present invention comprises a hydrogel with a polymer concentration comprised between 1 to 3 %w/v.

According to the preferred embodiment of the present invention, the optical fibers object of the present invention comprises a hydrogel with agarose concentration equal to 2 % w/v.

Preferably, the hydrogel of such optical fibers comprises an amount of water-based solvent comprised between 97 and 99% w/v.

According to the preferred embodiment of the present invention, the agarose hydrogel of said optical fibers comprises an amount of water-based solvent equal to 98 % w/v.

Preferably, water-based solvent comprised in the hydrogel is deionized and filtered water.

The hydrogel 2 is provided with a threshold temperature, which divides the possible temperatures of said hydrogel 2 in two operating temperature ranges:
- a first temperature range, wherein said hydrogel 2 is in a liquid state;
- a second temperature range, opposite to said first temperature range, wherein said hydrogel 2 is in a solid state.

Preferably, the bioresorbable and/or biocompatible optical fiber constituted by said hydrogel 2 has a refractive index comprised between 1.34 and 1.56.

Another object of the present invention is a method for functionalizing a polymer.

In the purpose of the remaining description, the expression "polymer" must be interpreted as comprising both the sol state (which is liquid state) and the *gel*state (which is solid or semi-solid state) of the polymer itself.

Said method, which is also object of the present invention, can be applied to functionalize one or more polymers used in the method, described above, for producing a bioresorbable and/or biocompatible optical fiber.

All the technical features disclosed with reference to the method for producing a bioresorbable and/or biocompatible optical fiber described above are disclosed - taken alone or in any combination thereof - also with reference to the method for functionalizing a polymer, disclosed in the following.

In particular, all the technical features disclosed with reference to the polymers (and the features thereof) used in the method for producing a bioresorbable and/or biocompatible optical fiber described above are disclosed - taken alone or in any combination thereof - also with reference to the polymers (and the features thereof) used in the method for functionalizing a polymer.

The method for functionalizing a polymer comprises a preliminary step of modifying said polymer with at least one modifying agent.

Preferably, the preliminary step involves a first sub-step of dissolving said polymer in a solvent.

According to a preferred embodiment of the present invention, the polymer is Agarose.

Preferably, said polymer is used in a concentration comprised between 1 to 3%w/v. More preferably, said polymer is used in a concentration equal to 2%w/v.

Conveniently, said solvent is preferably selected from the group of the aprotic solvents. More preferably, said solvent is dimethyl sulfoxide (also known as DMSO).

Conveniently, said first sub-step is preferably carried out at a temperature comprised between 90°C and 110°C. More preferably, said first sub-step is carried out at a temperature equal to 100°C.

Preferably, said first sub-step is carried out by stirring said polymer with said solvent, obtaining a polymeric solution.

More in detail, the preliminary step of the method for functionalizing a polymer also involves a second sub-step of adding said modifying agent to the polymeric solution obtained at the end of the first sub-step.

Conveniently, the modifying agent can be selected from the group comprising dicarboxylic acid derivatives.

According to the preferred embodiment, the modifying agent is succinic anhydride.

Preferably, said modifying agent is used in a concentration comprised between 1 to 3 %w/w. More preferably, said modifying agent is used in a concentration equal to 2% w/w.

Conveniently, said second sub-step can be preferably carried out at a temperature comprised between 50°C and 70°C. More preferably, said second sub-step is carried out at a temperature equal to 60°C.

Preferably, said second sub-step is carried by stirring said polymeric solution with said modifying.

Conveniently, the method provides a third sub-step, following said second sub-step, which provides a chemical reaction between the modifying agent and the polymeric solution. Preferably the third sub-step is carried out for a period comprised between 15 to 25 hours, more preferably for 20 hours.

At the end of said third sub-step, the preliminary step allows to obtain a modified polymer and waste compounds (e.g. undesired by-products generated during the third sub-step).

Preferably, the preliminary step comprises a fourth sub-step, which involves a removal of said waste compounds from said modified polymer. In particular, said fourth sub-step is performed by precipitation of said modified polymer.

Preferably, the fourth sub-step can involve a washing of the modified polymer with a solvent, such as ethanol.

Conveniently, at the end of the preliminary step, the method according to the invention allows to obtain modified polymer.

The modified polymer is configured to bind with a receptor, as disclosed in the following.

According to the preferred embodiment of the present invention, said modified polymer is succinyl-agarose.

It is important to notice that the modification of the agarose into succinyl-agarose does not alter the ability of said material to go from a liquid state, when it is in a first temperature range, to a solid state when it is in second temperature range as already described above.

The method for functionalizing a polymer comprises a further step of coupling at least one receptor to said modified polymer.

Preferably, said receptor is configured to chemically bound target molecules to be detected.

More in detail, said target molecules are selected from the group comprising biomarkers and/or drugs. According to a preferred embodiment of the present invention, said target molecules are drugs. Preferably, said drugs belong to the group of chemotherapeutic drugs.

Preferably, said target molecule is selected among the drugs which comprise at least one functional group capable of emitting at least one beam R1 of electromagnetic radiation.

For the purposes of this patent application, the term 'electromagnetic radiation' is to be understood as any emission of electromagnetic waves at any wavelength.

Preferably, the drug detectable by the modified polymer according to the invention is a drug susceptible to emit a beam R1 of electromagnetic waves through photoluminescence, in particular fluorescence.

Preferably, the beam R1 of electromagnetic waves emitted by the drug has a wavelength between 500 nm and 650 nm, and in particular between 540 nm and 590 nm.

More specifically, the R1 beam of electromagnetic waves has greater intensity at a first wavelength of approximately 540 nm and at a second wavelength of approximately 590 nm.

According to the preferred embodiment of the present invention, the drug is doxorubicin and, preferably, comprises at least one emissive group capable of generating the R1 beam of electromagnetic radiation.

In accordance with the preferred embodiment of the present invention, said at least one receptor comprises human serum albumin, also known as HSA.

Advantageously, the receptor is chosen so that it can selectively bind a predetermined drug. More in detail, the receptor is chosen so that it can selectively bind doxorubicin.

Conveniently, the step of coupling at least one receptor involves a sub-step of activation of said modified polymer obtained in the preliminary step.

More in detail, said activation sub-step is carried out by adding at least one activating agent to the modified polymer.

Said activating agent is preferably configured to promote the interaction between said modified polymer and said at least one receptor. More in detail, the activating agent bind with both the modified polymer and the receptor.

Preferably, said activating agents are selected form the group comprising carboxyl activating agents.

More preferably, said activating agents are 1-ethyl-3-(3-dimethylaminopropyl) carbodiimide, also known as EDC, and N-Hydroxysuccinimide, also known as NHS.

According to the preferred embodiment of the invention, said activating agents are used in the following molar ratio ranges: succinyl-agarose/EDC comprised between 1:1 and 1:2, and EDC/NHS comprised between 1:1 and 3:1.

According to the preferred embodiment of the invention, the activating agent (as selected above) is configured to bind the modified polymer (preferably succinyl-agarose) with HSA (which is the preferred receptor according to the invention).

Conveniently, the activation sub-step can be preferably carried out at a temperature comprised between 20°C and 70°C.

Moreover, the activation sub-step involves a chemical reaction between the modified polymer and the activating agent which is carried out for a period of time preferably comprised between 1 to 7 hours.

Preferably, said activation sub-step is carried out by stirring said modified polymer with said activating agent.

Preferably, the activation sub-step allows to obtain an activated modified polymer.

Following the activation sub-step, a linking sub-step is provided in order to link said activated modified polymer with said at least one receptor. The activated modified polymer bound with the al least one receptor defines the functionalized polymer according to the invention.

During said linking sub-step, an aqueous solution of HSA is added to the activated modified polymer so that a binding reaction between HSA and the activated modified polymer takes place.

In accordance with the preferred embodiment of the invention, the at least one receptor is used in a succinyl-agarose/HSA weight ratio comprised between 1:1 and 3:1.

Preferably, the binding reaction between HSA and the activated modified polymer is carried out at a temperature comprised between 20°C and 65°C.

Moreover, the binding reaction between HSA and the activated modified polymer requires a period of time comprised between 1.5 to 15 hours.

Preferably, said method for functionalizing a polymer can be implemented in the above-described method for producing a bioresorbable and/or biodegradable optical fibers.

In the following a first and a second embodiment of application of the method for functionalizing a polymer within the method for producing a bioresorbable and/or biodegradable optical fibers is disclosed. Hence, most of the steps disclosed above will be disclosed in two further preferred details, which are capable of combining the two aforementioned methods.

According to a first embodiment, said step of coupling at least one receptor to the modified polymer is carried out before the step a) of provision of a hydrogel of at least one polymer already described for the method for producing a bioresorbable and/or biocompatible optical fibers.

In accordance with said first embodiment, the activation sub-step involves a chemical reaction between the modified polymer and the activating agent with the following molar ratios: succinyl-agarose/EDC 1:1 e EDC/NHS 1:1.

In accordance with said first embodiment, the activation sub-step involves a chemical reaction between the modified polymer and the activating agent which is preferably carried out at a temperature equal to 50°C.

In accordance with said first embodiment, the activation sub-step involves a chemical reaction between the modified polymer and the activating agent which is preferably carried out for 1.5 hours.

Preferably, the linking sub step involves the binding reaction between HSA and the activated modified polymer with the following weight ratio succinyl-agarose/HSA 3:1.

Preferably, the linking sub step involves the binding reaction between HSA and the activated modified polymer which is carried out at a temperature equal to 50°C.

Preferably, the linking sub step involves the binding reaction between HSA and the activated modified polymer which requires a period of time equal to 1.5 hours.

Preferably, the chemical reaction of said activation sub-step and the binding reaction of said linking sub-step are both carried out under stirring conditions. At the end of the binding reaction, the functionalized polymer is precipitated using a solvent such as ethanol.

According to a second embodiment, said step of coupling at least one receptor is carried out after step c) of extrusion of a hydrogel already described in the method for producing a bioresorbable and/or biocompatible optical fibers.

In accordance with said second embodiment, the activation sub-step involves a chemical reaction between the modified polymer and the activating agent with the following molar ratio: succinyl-agarose/EDC 1:1 e EDC/NHS 3:1.

In accordance with said second embodiment, the activation sub-step involves a chemical reaction between the modified polymer and the activating agent which is preferably carried out at a temperature equal to 25°C.

In accordance with said second embodiment, the activation sub-step involves a chemical reaction between the modified polymer and the activating agent which is preferably carried out for a period of time equal to 3 hours.

Preferably, the linking sub step involves the binding reaction between HSA and the activated modified polymer with the following weight ratio: succinyl-agarose/HSA 1:1 w/w.

Preferably, the linking sub step involves the binding reaction between HSA and the activated modified polymer which is carried out at a temperature of 25°C.

Moreover, the linking sub step involves the binding reaction between HSA and the activated modified polymer which is carried out for a period of time of about 12 hours.

Preferably, the chemical reaction of the activation sub-step and the binding reaction of said linking sub-step are both carried out under stirring conditions. At the end of the binding reaction, the functionalized polymer us washed using deionized water.

Preferably, the method for functionalizing a polymer is intended to obtain an optical device comprising a polymer functionalized with at least one receptor.

Preferably, said optical device comprises an optical fiber obtainable with the method for producing a bioresorbable and/or biodegradable optical fibers according to the invention, with the method for functionalizing a polymer implemented in the above-described method for producing bioresorbable and/or biocompatible optical fibers.

Preferably, according to the first embodiment, said method is intended to produce optical devices directly in a hosting material 33. More in detail, according to the first embodiment, the method allows to produce an optical device comprising a polymer which is already functionalized.

Differently, according to the second embodiment, said method allows to functionalize pre-formed optical devices (preferably pre-formed optical fibers).

Preferably, all the technical features disclosed with reference to the optical fibers obtained by applying the method for producing a bioresorbable and/or biocompatible optical fiber described above are to be understood - taken alone or in any combination thereof - also with reference to the optical device, and thus also to the optical fiber, obtained by applying said further method for functionalizing a polymer.

Preferably, said optical device can be used in biomedical sensing to detect target molecules, such as biomarkers and/or drugs.

A use example of the optical device is disclosed in the following.

As already mentioned above, the target molecule is preferably doxorubicin and, preferably, it comprises at least one emissive group capable of generating the R1 beam of electromagnetic radiation.

Conveniently, the optical device is intended to be implanted in a hosting material 33, for example the body of a patient. Differently, the optical device can be used externally of the hosting material.

According to the first preferred embodiment the optical fiber can be extruded directly within the hosting material 33, e.g. the optical fiber can be extruded directly within a biological tissue, such as a living tissue of a patient.

Obviously, the optical device according to the invention can also be used in veterinary medicine. In the following, the term "hosting material" will be used independently from the actual application, being it lifeless, human, animal or other.

More in detail, when said optical device is placed in the presence of a target molecule D, such as doxorubicin, said target molecule D chemically bind to the receptors.

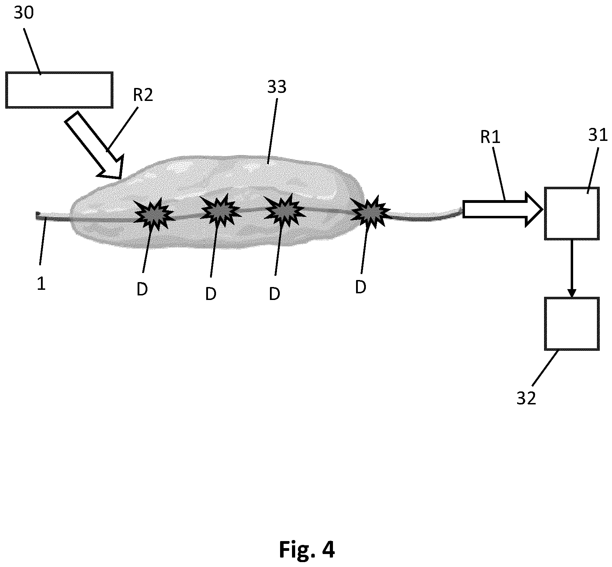

Operationally, in use, the optical device is intended to be implanted inside the body of a patient and one or more external apparatuses is intended to be arranged outside the body of said patient, in proximity to said optical device, as visible in Figure 4.

Advantageously, said external apparatus can comprise at least one emitter module, sensor means and a processing module.

More in detail, the emitter module 30 is configured to generate at least one excitation beam R2 of electromagnetic radiation, suitable for intercepting said optical device and stimulating the emission of said beam R1 of electromagnetic radiation.

Suitably, the excitation beam R2 strikes the optical device, exciting the target module D and forcing its functional group, in particular its emissive group, to emit the beam R1 in response.

In accordance with the preferred embodiment, the excitation beam R2 has an excitation wavelength about equal to 480 nm, which preferably is equivalent to the absorption wavelength of the emissive group of doxorubicin, so that the beam R1 emitted by the optical device has an emission peak with an emission wavelength about equal to 590 nm.

Preferably, when the optical device is a functionalized optical fiber 1, said excitation beam R2 is conveyed inside the optical fiber itself.

Advantageously, the external apparatus comprises sensor means 31, configured to receive said beam R1 of electromagnetic radiation emitted by said optical device and generate an electronic signal corresponding to said intensity of said electromagnetic radiation.

Preferably, when the optical device is a functionalized optical fiber 1, said beam R1 of emitted electromagnetic radiation is transmitted to the sensor means 31 through the optical fiber 1 itself.

For example, the sensor means 31 may comprise an optical sensor, per se known to the person skilled in the art, such as a photodiode, and therefore not described in detail herein.

Advantageously, the external apparatus comprises a processing module 32, configured to receive said electronic signal, process it, and generate at least one numerical value corresponding to said concentration of said target molecule D.

For the purposes of the present invention, the expression "concentration" is to be understood as the mass of drug present in a given volume of liquid, e.g., patient plasma.

The present invention is embodiable in other variations all of which fall within the scope and purpose of the inventive features claimed and described; these technical features may be substituted by different technically equivalent elements. The used materials, the shapes and dimensions of the features of the invention may be substituted by any equivalent per-se known by the person skilled in the art, as long as they are compatible with their intended use.

The numbers and reference marks inserted in the claims, the description and the drawings have the sole purpose of increasing the clarity of the text and are not to be considered as limiting the technical interpretation of the objects or processes identified by them.

## Claims

1. Method for producing a bioresorbable and/or biocompatible optical fiber (1), comprising at least the following steps:
a) provision of at least one hydrogel (2) of at least one polymer;
said polymer being selected from the group comprising bioresorbable and/or biocompatible polymers;
**characterized in that** said hydrogel (2) being provided with a threshold temperature, which divides the possible temperatures of said hydrogel (2) in two operating temperature ranges:
- a first temperature range, wherein said hydrogel (2) is in a liquid state;
- a second temperature range, opposite to said first temperature range, wherein said hydrogel (2) is in a solid state;
**said method** comprising at least the following further steps:
b) first temperature regulation of said hydrogel (2), through heating and/or cooling means (3), so as to heat and/or cool said hydrogel (2) above and/or below said threshold temperature, in order to lead said hydrogel (2) in the first temperature range;
c) extrusion of said hydrogel (2) in liquid state through extrusion means (4), shaping said hydrogel into at least a filament (5);
during said step c) said hydrogel (2) changing from said first temperature range in liquid state to said second temperature in solid state;
said filament (5) of said hydrogel (2) in solid state defining said optical fiber (1).

2. Method for producing a bioresorbable and/or biocompatible optical fiber according to claim 1, **characterized in that** said at least one polymer is selected from the group comprising Agarose, Methylcellulose, Pluronic, Polyethylene glycol diacrylate (PEGDA), Polyacrylamide (PAM) and/or their functionalized form.

3. Method for producing a bioresorbable and/or biocompatible optical fiber according to one or more of the preceding claims, **characterized in that** said polymer is Agarose.

4. Method for producing a bioresorbable and/or biocompatible optical fiber according to one or more of the preceding claims, **characterized in that** said first temperature range is above said threshold temperature and said second temperature range is below said threshold temperature.

5. Method for producing a bioresorbable and/or biocompatible optical fiber according to one or more of the preceding claims, **characterized in that** said at least one polymer is used in a concentration comprised between 1 to 3 %w/v.

6. Method for producing a bioresorbable and/or biocompatible optical fiber according to one or more of the preceding claims, **characterized in that** said at least one polymer is used in a concentration equal to 2 %w/v.

7. Method for producing a bioresorbable and/or biocompatible optical fiber according to one or more of the preceding claims, **characterized in that** said step a) comprises a first sub-step of heating said solution, preferably between 50°C and 80°C.

8. Method for producing a bioresorbable and/or biocompatible optical fiber according to one or more of the preceding claims, **characterized in that** said step a) comprises a second sub-step of stirring said solution, obtaining and homogeneous liquified hydrogel (2).

9. Method for producing a bioresorbable and/or biocompatible optical fiber according to one or more of the preceding claims, **characterized in that** said step c) involves the passage of the liquified hydrogel (2) through a nozzle (6) having a cross section equal to the cross section desired for the optical fiber (1).

10. Method for producing a bioresorbable and/or biocompatible optical fiber according to one or more of the preceding claims, **characterized in that** said nozzle (6) has a cross section having an average diameter comprised between 0.1 and 2 mm, so that said step c) provides an optical fiber (1) having an average diameter comprised between 0.1 and 2 mm.

11. Method for producing a bioresorbable and/or biocompatible optical fiber according to one or more of the preceding claims, **characterized in that** said nozzle (6) extends between a first end (7) in which, during said step c) the hydrogel (2) enters in the liquid state, and a second end (8) from which, during said step c), the hydrogel (2) exits in the solid state.

12. Method for producing a bioresorbable and/or biocompatible optical fiber according to one or more of the preceding claims, **characterized in that**, upstream of said first end (7), the hydrogel (2) is kept in said first temperature range, in said step c) said hydrogel (2) passes from the first temperature range to the second temperature range while it is extruded through said nozzle (6).

13. Method for producing a bioresorbable and/or biocompatible optical fiber according to one or more of the preceding claims, **characterized in that** said step b) is executed by housing said hydrogel (2) in a reservoir (9) heated by heating means (3), said reservoir (9) being fluidically connected to said first end (7) of said nozzle (6).

14. Method for producing a bioresorbable and/or biocompatible optical fiber according to claim one or more of the preceding claims, **characterized in that** said at least one polymer of said hydrogel is a functionalized polymer comprising at least one receptor configured to bind at least one target molecule.

15. Bioresorbable and/or biocompatible optical fiber (1) comprising at least one layer of hydrogel (2) of at least one polymer, said polymer being selected from the group comprising bioresorbable and/or biocompatible polymers;
**characterized in that said** hydrogel (2) is provided with a threshold temperature, which divides the possible temperatures of said hydrogel (2) in two operating temperature ranges:
- a first temperature range, wherein said hydrogel (2) is in a liquid state;
- a second temperature range, opposite to said first temperature range, wherein said hydrogel (2) is in a solid state.
